# EUROPÄISCHE PATENTSCHRIFT

(11) **EP 1 693 650 B1**
(45) Veröffentlichungstag und Bekanntmachung des Hinweises auf die Patenterteilung: **14.04.2010**
(21) Anmeldenummer: 06002610.1
(22) Anmeldetag: 09.02.2006
(51) Int. Cl.: G01D 5/38, G01D 5/347

(54) **Abtasteinheit für eine Positionsmesseinrichtung**
Scanning unit for a position measuring device
Unité de balayage destinée à un dispositif de mesure de position

(30) Priorität: 22.02.2005 DE 102005009043
(43) Veröffentlichungstag der Anmeldung: 23.08.2006
(73) Patentinhaber: Dr. Johannes Heidenhain GmbH, 83292 Traunreut (DE)
(72) Erfinder: Huber, Walter, 83278 Traunstein (DE); Höfer, Volker, 83301 Traunreut (DE)

(56) Entgegenhaltungen:
- DE-A1- 19 941 318
- US-A- 4 650 993

## Beschreibung

Die Erfindung betrifft eine Abtasteinheit für eine Positionsmesseinrichtung zum Abtasten einer Maßverkörperung (Messteilung) der Positionsmesseinrichtung nach dem Oberbegriff des Patentanspruchs 1.

Eine derartige Abtasteinheit umfasst eine auf einem Träger vorgesehene derartig ausgebildete Abtaststruktur, dass durch Wechselwirkung einer zur Abtastung der Maßverkörperung verwendeten elektromagnetischen Strahlung (insbesondere in Form von Licht) sowohl mit der Maßverkörperung als auch mit der Abtaststruktur ein periodisches Streifenmuster erzeugt wird. Ferner umfasst die Abtasteinheit eine Detektoranordnung zur Detektion jenes Streifenmusters, die aus einer Mehrzahl hintereinander angeordneter Detektorelemente unterschiedlicher zugeordneter Phasen besteht, wobei die Anordnung der Detektorelemente unterschiedlicher Phasen ein periodisches Muster bezüglich der Phasen bildet und wobei jedem Detektorelement genau ein als Steg bezeichneter Teilbereich der Abtaststruktur zugeordnet ist und wobei ferner die Detektorelemente derart zu zwei Detektorgruppen zusammengefasst sind, dass Detektorelemente gleicher Phase zu derselben Detektorgruppe gehören und die zu einer Detektorgruppe zusammengefassten Detektorelemente jeweils zur Erzeugung eines Ausgangssignales der Detektoranordnung miteinander verschaltet sind. Dies erfolgt regelmäßig in der Weise, dass jeweils Detektorelemente einer ersten Phase (z.B. der Phase 0°) und der hierzu invertierten Phase (also im Beispiel der Phase 180°) zu einer ersten Detektorgruppe verschaltet sind sowie Detektorelemente einer hiervon verschiedenen weiteren Phase (z.B. der Phase 90°) und der hierzu invertierten Phase (also im Beispiel der Phase 270°) zu einer zweiten Detektorgruppe verschaltet sind. Die jeweilige Verschaltung der Detektorelemente einer bestimmten Phase mit Detektorelementen der hierzu invertierten Phase erfolgt insbesondere in Differenz.

Unter einer periodischen Anordnung der Detektorelemente wird hier nicht im strengen mathematischen Sinn eine unendliche Periode verstanden, sondern vielmehr eine Anordnung von Detektorelementen unterschiedlicher Phase derart, dass die Detektorelemente mit wechselnden Phasen hintereinander angeordnet sind, indem zwischen zwei Detektorelementen gleicher Phase jeweils genau einmal ein Detektorelement jeder anderen Phase vorhanden ist.

In der EP 1 081 457 A2 ist eine Positionsmesseinrichtung mit einer Abtasteinheit der eingangs genannten Art beschrieben, deren Detektoranordnung eine Vielzahl hintereinander angeordnete Detektorelemente der Phasen 0°, 90°, 180° und 270° aufweist, wobei die Detektorelemente der Phasen 0° und 180° sowie die Detektorelemente der Phasen 90° und 270° ausgangsseitig miteinander verschaltet sind. Die Anordnung der Detektorelemente ist periodisch hinsichtlich der zugeordneten Phasen, d. h. auf ein Detektorelement der Phase 0° folgt stets ein Detektorelement der Phase 90°, hierauf wiederum ein Detektorelement der Phase 180° und darauf schließlich ein Detektorelement der Phase 270°. Sodann wird diese Periode beginnend mit einem Detektorelement der Phase 0° erneut durchlaufen.

Die Phasenangaben zu den Detektorelementen beziehen sich jeweils auf die Lage des jeweiligen Detektorelementes innerhalb einer durch vier Detektorelemente gebildeten Periode, welche derart ist, dass die von benachbarten Detektorelementen erzeugten Ausgangssignale jeweils einen Phasenversatz von 90° zueinander aufweisen. Dabei sind jeweils die einen Phasenversatz von 180° zueinander aufweisenden Detektorelemente, welche in der Detektoranordnung dementsprechend übernächste Nachbarn bilden, in Differenz zusammengeschaltet, so dass deren Ausgangssignale zu einem einheitlichen Ausgangssignal der Detektoranordnung verknüpft werden.

Wird mit einer derartigen Abtasteinheit eine Maßverkörperung abgetastet, die entlang einer gekrümmten Bahn verläuft, etwa eine auf einer Trommel mit definiertem Radius aufgebrachte Maßverkörperung, so kann es zu einem Phasenwinkelfehler zwischen den von den beiden Detektorgruppen erzeugten Signalen kommen, weil die Phase des Vernier-Streifenmusters, das durch Wechselwirkung der zum Abtasten verwendeten elektromagnetischen Strahlung (Licht) mit der Maßverkörperung und der Abtaststruktur erzeugt wird, keinen exakten Sägezahnverlauf aufweist.

Aus der US 4,650,993 desweiteren ist eine Abtasteinheit, über die Phasenfehler bei der optischen Abtastung einer Maßverkörperung vermieden werden. Hierzu wird eine speziell ausgebildete Detektoranordnung mit gruppenweise zusammengehörigen, phasenverschieden Detektorelementen vorgeschlagen, bei der die Flächen der einzelnen Gruppen identisch sind und die Flächenschwerpunkte der Gruppen zusammenfallen. Insbesondere für die Abtastung einer trommelförmig angeordneten Maßverkörperung ist diese Lösung jedoch nicht ideal, es resultieren nach wie vor Phasenfehler in den Ausgangssignalen.

Der Erfindung liegt daher das Problem zugrunde, eine Abtasteinheit der eingangs genannten Art weiter zu verbessern.

Dieses Problem wird erfindungsgemäß durch die Schaffung einer Abtasteinheit mit den Merkmalen des Patentanspruchs 1 gelöst.

Danach sind die Stege der Abtaststruktur derart ausgebildet und angeordnet, dass die Gesamtheit der der ersten Detektorgruppe zugeordneten Stege der Abtaststruktur und die Gesamtheit der der zweiten Detektorgruppe zugeordneten Stege jeweils eine gleichgroße aktive Fläche auf dem Träger der Abtaststruktur überdecken und dass der Flächenschwerpunkt der von der Gesamtheit der der ersten Detektorgruppe zugeordneten Stege überdeckten Fläche einerseits und der Flächenschwerpunkt der von der Gesamtheit der der zweiten Detektorgruppe zugeordneten Stege überdeckten Fläche andererseits zusammenfallen. Durch die symmetrische Anordnung der Stege der Abtaststruktur in der Weise, dass die Gesamtheit der der ersten Detektorgruppe zugeordneten Stege und die Gesamtheit der der zweiten Detektorgruppe zugeordneten Stege jeweils den gleichen Flächenschwerpunkt aufweisen, wobei außerdem beide besagten Gesamtheiten an Stegen eine gleichgroße aktive Fläche auf den Träger der Abtaststruktur überdecken, wird das Auftreten von Phasenwinkelfehlern bei der Abtastung gekrümmter Maßverkörperungen vermieden.

Dass beide Gesamtheiten an Stegen den gleichen Flächenschwerpunkt aufweisen bzw. deren beide Flächenschwerpunkte zusammenfallen, bedeutet hier, dass die beiden (zusammenfallenden) Flächenschwerpunkte - in Erstreckungsrichtung der Abtaststruktur betrachtet - an derselben Stelle in Richtung jener Erstreckungsachse liegen.

Unter der aktiven Fläche der Abtaststruktur wird dabei die Gesamtfläche der Abtaststruktur verstanden, die gemeinsam mit der Maßverkörperung zu der Entstehung eines Streifenmusters aufgrund der Wechselwirkung elektromagnetischer Strahlung einerseits mit der Maßverkörperung und andererseits mit der Abtaststruktur beiträgt. Hierzu zählen insbesondere nicht solche Schichten , die die zum Abtasten verwendete elektromagnetische Strahlung absorbieren und daher hier als nicht aktive bzw. inaktive Schichten bezeichnet werden.

Gemäß einer konkreten Ausführungsform der Erfindung wird eine solche Anordnung der Stege der Abtaststruktur dadurch erreicht, dass die Gesamtheit der einer der beiden Detektorgruppen zugeordneten Stege symmetrisch bezüglich einer durch den Flächenschwerpunkt jener Anordnung verlaufenden Achse angeordnet ist. Hierbei schneidet jene Achse einen der Stege, so dass dieser symmetrisch bezüglich der Achse liegt. Ferner ist vorgesehen, dass die Gesamtheit der einer der beiden Detektoranordnungen zugeordneten Stege einen Steg mehr aufweist als die Gesamtheit der der anderen der beiden Detektorgruppen zugeordneten Stege.

Die symmetrische Anordnung jener Gesamtheit an Stegen der Abtaststruktur erfolgt dabei in der Weise, dass Stege der Abtaststruktur, die Detektorelementen ein und derselben Phase zugeordnet sind, jeweils einen spiegelsymmetrischen Partner auf der anderen Seite der durch den Flächenschwerpunkt verlaufenden Achse aufweisen.

Bevorzugt handelt es sich bei der Gesamtheit an Stegen, die einen Steg mehr aufweist als die andere Gesamtheit, um diejenige Gesamtheit an Stegen, die symmetrisch bezüglich einer senkrecht zur Erstreckungsrichtung der Abtaststruktur durch den Flächenschwerpunkt verlaufenden Achse ausgebildet ist.

Damit diejenige Gesamtheit an Stegen, die einen Steg mehr aufweist, als die andere Gesamtheit an Stegen der Abtaststruktur auf dem Träger der Abtaststruktur die gleiche aktive Fläche überdeckt, weisen bei der erstgenannten Gesamtheit an Stegen zwei symmetrisch zueinander angeordnete Stege eine geringere aktive Fläche auf als die übrigen Stege der Abtaststruktur. Dabei sind diese beiden Stege jeweils Detektorelementen gleicher Phase zugeordnet und dabei bevorzugt Detektorelementen einer anderen Phase als derjenige Steg, der von der durch den Flächenschwerpunkt verlaufenden Symmetrieachse geschnitten wird.

Die Reduktion der aktiven Fläche der Stege kann beispielsweise dadurch erzielt werden, dass die Stege eine geringere Ausdehnung quer zu der Richtung aufweisen, entlang der die Vielzahl an Stegen der Abtaststruktur hintereinander angeordnet ist, als die übrigen Stege. Gemäß einem anderen Ausführungsbeispiel kann vorgesehen sein, dass die Stege mit reduzierter aktiver Fläche aus einer Mehrzahl zueinander beabstandeter Stegbereiche bestehen, die quer zu der Richtung nebeneinander liegen, entlang der die einzelnen Stege hintereinander angeordnet sind.

Gemäß einer Weiterbildung der Erfindung fallen die Teilschwerpunkte jeweils aller Stege der Abtaststruktur, die Detektorelementen ein und derselben Phase zugeordnet sind, mit dem oben definierten Flächenschwerpunkt der Gesamtanordnung zusammen.

Hierzu müssen bei den Untergruppen an Stegen, die Detektorelementen einer Phase zugeordnet sind und die nicht symmetrisch bezüglich der durch den Flächenschwerpunkt verlaufenden Achse angeordnet sind, die aktiven Flächen der Stege derart variieren, dass deren Teilschwerpunkt dennoch mit dem Flächenschwerpunkt der Gesamtanordnung zusammenfällt. Hierzu muss bei jenen Stegen die aktive Fläche eines Steges abhängig von dessen Abstand von der Symmetrieachse sein.

Weitere Einzelheiten und Vorteile der Erfindung werden bei der nachfolgenden Beschreibung von Ausführungsbeispielen anhand der Figuren deutlich werden.

Es zeigern:
- Fig. 1: ein erstes Ausführungsbeispiel einer Abtaststruktur und einer Detektoranordnung für eine Abtasteinheit einer Positionsmesseinrichtung;
- Fig. 2: ein zweites Ausführungsbeispiel einer Abtaststruktur und einer Detektoranordnung für eine Positionsmesseinrichtung;
- Fig. 3: eine weitere Abtaststruktur und eine Detektoranordnung für eine Positionsmesseinrichtung;
- Fig. 4: eine weitere Abtaststruktur und eine Detektoranordnung für eine Positionsmesseinrichtung;
- Fig. 5: eine bekannte Abtaststruktur und Detektoranordnung einer Abtasteinheit für eine Positionsmesseinrichtung;
- Fig. 6: eine Positionsmesseinrichtung, in der eine Abtaststruktur und Detektoranordnung gemäß einer der Figuren 1 bis 5 verwendet werden kann.

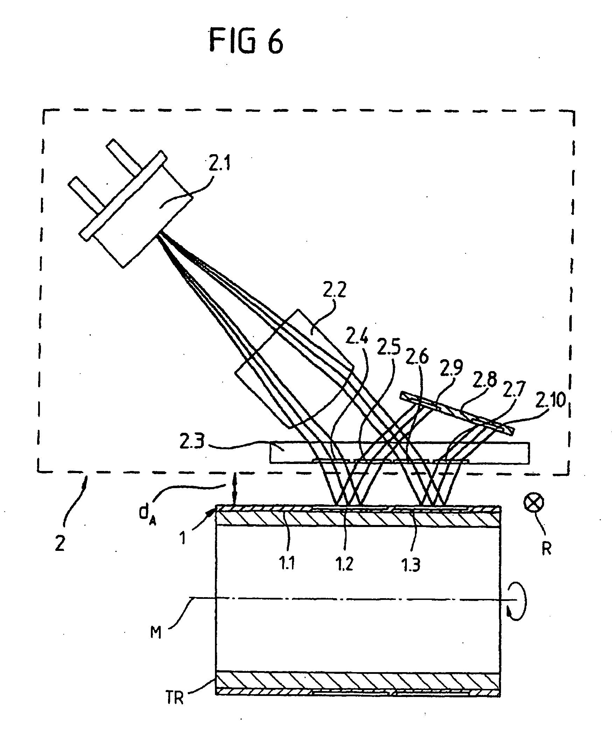

In Figur 6 ist eine als Auflicht-Messsystem ausgebildete Positionsmesseinrichtung dargestellt, die ein an einer im Querschnitt kreisrunden äußeren Oberfläche einer Trommel T umlaufendes Maßband 1 sowie eine zugeordnete Abtasteinheit 2 umfasst. Das auf der Trommel T angeordnete Maßband 1 sowie die Abtasteinheit 2 sind bei einer Drehbewegung der Trommel T um ihre Dreh- bzw. Mittelachse M entlang einer Messrichtung R zueinander beweglich, die durch die Drehbewegung der Trommel T um die Dreh- bzw. Mittelachse M vorgegeben ist. Das Maßband 1 und die zur Abtastung des Maßbandes 1 vorgesehene Abtasteinheit 2 sind hierbei in einem Abtastabstand d_{A} angeordnet.

Das Maßband 1 umfasst eine Maßverkörperung 1.2, die in bekannter Weise als eine Inkrementalteilungsspur ausgebildet sein kann und die auf einem Trägerkörper 1.1 des Maßbandes 1 angeordnet ist. Neben der Maßverkörperung 1.2, die zur Erzeugung von Inkrementalsignalen dient, mit denen eine Relativbewegung des Maßbandes 1 der Trommel T bezüglich der Abtasteinheit 2 erfassbar ist, ist auf dem Trägerkörper 1.1 des Maßbandes 1 mindestens eine Referenzmarkierung 1.3 vorgesehen. Mit Hilfe der Referenzmarkierung 1.3, d. h. durch Erzeugung eines entsprechenden Referenzimpulssignales, wird im Messbetrieb in bekannter Weise ein Absolutbezug bei der Positionsmessung hergestellt.

Sowohl die Maßverkörperung 1.2 als auch die Referenzmarkierung 1.3 bestehen aus einer in Messrichtung R alternierenden Abfolge von Teilbereichen mit unterschiedlichen optischen Reflektionseigenschaften, beispielsweise hochreflektierenden und nicht-reflektierenden Teilbereichen. Die Teilungsperiode der inkrementalen Maßverkörperung 1.2 wird im Folgenden mit TP bezeichnet; sie ist durch die Summe der Breiten eines hochreflektierenden und eines nichtreflektierenden Teilbereiches in Messrichtung R definiert.

Die Referenzmarkierung 1.3 besteht in üblicher Weise aus einer aperiodischen Verteilung von Teilbereichen unterschiedlicher Reflektionseigenschaften.

Die Abtasteinheit 2 der in Figur 6 dargestellten Positionsmesseinrichtung umfasst eine Strahlungsquelle für elektromagnetische Strahlung in Form einer Lichtquelle 2.1, eine Kollimatoroptik 2.2, eine Abtastplatte 2.3 sowie eine Detektionseinheit 2.8. In der Abtastplatte 2.3 sind zwei Fensterbereiche mit Teilungsstrukturen 2.4, 2.6 (Abtaststrukturen) versehen, während zwei weitere Fensterbereiche 2.5, 2.7 transparent, d. h. ohne Teilungsstrukturen, ausgebildet sind. Ein erstes Paar von Fensterbereichen 2.4, 2.5 dient in Verbindung mit weiteren Komponenten der Positionsmesseinrichtung zur Erzeugung der zur Bestimmung der Relativposition des Maßbandes 1 bezüglich der Abtasteinheit 2 verwendeten Inkrementalsignale, während das zweite Paar mit Fensterbereichen 2.6, 2.7 zur Erzeugung ein oder mehrerer Referenzimpulssignale dient. Zur Erfassung der Inkrementalsignale einerseits und der Referenzimpulssignale andererseits sind an der Detektionseinheit 2.8 eine erste Detektoranordnung 2.9 sowie eine zweite Detektoranordnung 2.10 vorgesehen. Die Erzeugung und Erfassung der Inkrementalsignale erfolgt dabei in der nachfolgend näher beschriebenen Art und Weise.

Von der Lichtquelle 2.1, z. B. einer Infrarot-LED, ausgesandte Strahlenbündel werden von der Kollimatoroptik 2.2 parallelisiert und durchtreten die Teilungsstruktur (Abtaststruktur 2.4) in dem einen Fensterbereich des der Erzeugung der Inkrementalsignale dienenden ersten Fensterpaares. Anschließend treffen die durch die Abtaststruktur 2.4 in jenem Fensterbereich tretenden Strahlenbündel auf die Maßverkörperung 1.2 des Maßbandes 1, die in diesem Beispiel als Reflexions-Maßverkörperung ausgebildet ist. Die Abtaststruktur der Abtastplatte 2.3 sowie die durch eine Inkrementalteilungsspur gebildete Maßverkörperung 1.2 des Maßbandes 1 weisen geringfügig verschiedene Teilungsperioden auf, so dass aus der Wechselwirkung der Strahlenbündel einerseits mit der Abtaststruktur und andererseits mit der Maßverkörperung 1.2 ein periodisches Vernier-Streifenmuster resultiert.

Von der Maßverkörperung 1.2 werden die Strahlenbündel sodann in Richtung des transparenten Fensterbereiches 2.5 des ersten Fensterpaares der Abtastplatte 2.3 reflektiert. Nach dem Durchtreten jenes transparenten Fensterbereiches 2.5 gelangen die Strahlenbündel auf die erste Detektoranordnung 2.9 der Detektionseinheit 2.8. Die Detektoranordnung 2.9 dient zur Erfassung des Vernier-Streifenmusters und zur Erzeugung von Inkrementalsignalen, die für die relative Lage des Maßbandes 1 bezüglich der Abtasteinheit 2 repräsentativ sind.

Für weitere Einzelheiten hinsichtlich der bekannten Ausgestaltung einer Positionsmesseinrichtung der in Figur 6 dargestellten Art wird auf die EP 1 081 457 A2 verwiesen.

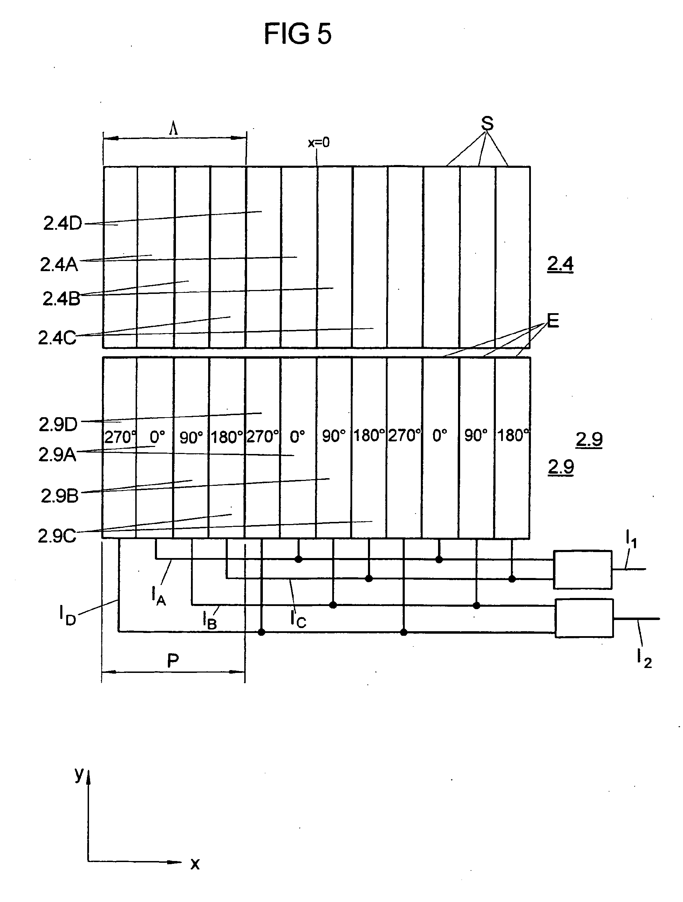

In Figur 5 ist zusätzlich schematisch eine bekannte Detektoranordnung 2.9 der Detektionseinheit 2.8 aus Figur 6 gezeigt. Eine derartige strukturierte Detektoranordnung 2.9 umfasst eine Vielzahl (rechteckiger) Detektorelemente E, die entlang einer tangential zur Messrichtung R (vergleiche Figur 6) verlaufenden Erstreckungsrichtung x (in Figur 6 senkrecht zur Blattebene orientiert) hintereinander angeordnet sind und dabei jeweils quer zur Erstreckungsrichtung x länglich ausgebildet sind.

Die Anordnung der Detektorelemente E in der Detektoranordnung 2.9 erfolgt in der Weise periodisch, dass jeweils 4 Detektorelemente E eine Periode P bilden. Die einzelnen Detektorelemente E einer Periode P unterscheiden sich dabei jeweils in ihrer Phase. Hierzu wird in jeder Periode P der Detektoranordnung 2.9 einem ersten Detektorelement die Phase 0°, einem zweiten Detektorelement die Phase 90°, einem dritten Detektorelement die Phase 180° sowie einem vierten Detektorelement die Phase 270° zugeordnet. Unter der Periodizität der Anordnung der Detektorelemente E ist dabei keine unendliche Periode im strengen mathematischen Sinn zu verstehen, sondern vielmehr eine regelmäßige, abwechselnde Anordnung der einzelnen Detektorelemente E in der Weise, dass zwischen zwei Detektorelementen E, die derselben Phase (z. B. 0°) zugeordnet sind, jeweils genau ein Detektorelement jeder anderen Phase (also z. B. 90°, 180°, 270°) liegt.

Die Detektorelemente E gleicher Phase sind jeweils zu Untergruppen 2.9A, 2.9B, 2.9C und 2.9D zusammengefasst, wobei in einer ersten Untergruppe 2.9A sämtliche Detektorelemente E der Phase 0°, in einer zweiten Untergruppe 2.9B sämtliche Detektorelemente E der Phase 90°, in einer dritten Untergruppe 2.9C sämtliche Detektorelemente der Phase 180° sowie schließlich in einer vierten Untergruppe 2.9D sämtliche Detektorelemente E der Phase 270° enthalten sind. Die in einer dieser Untergruppen 2.9A, 2.9B, 2.9C, 2.9D zusammengefassten Detektorelemente E zeichnen sich jeweils dadurch aus, dass sie bei Erfassung des an der Detektoranordnung 2.9 anliegenden Vernier-Streifenmusters Ausgangssignale I_{A}, I_{B}, I_{C} bzw. I_{D} gleicher Phase liefern, wobei die einzelnen Ausgangssignale I_{A}, I_{B}, I_{C} und I_{D} jeweils einen Phasenversatz von 90° zueinander aufweisen. Die vier Ausgangssignale I_{A}, I_{B}, I_{C}, I_{D}, die von jeweils einer der Detektorgruppen 2.9A, 2.9B, 2.9C und 2.9D erzeugt werden, sind jedoch nicht separat auszuwerten; vielmehr sind jeweils zwei Untergruppen 2.9A und 2.9C einerseits sowie 2.9B und 2.9D andererseits zu einer Detektorgruppe 2.9A, 2.9C bzw. 2.9B, 2.9D in der Weise zusammengefasst, dass die Ausgangssignale der jeweils zu einer Detektorgruppe zusammengefassten Untergruppen der Detektorelemente E mit Hilfe von Differenzverstärkern zur Bildung zweier ausgangsseitiger Detektorsignale (Inkrementalsignale I₁, I₂ ) verknüpft werden (Gegentaktverschaltung).

Die Periode Λ der Detektoranordnung wird auch als Vernier-Periode bezeichnet und ist dadurch charakterisiert, dass bei einem linearen Positionsmesssystem (also bei Verwendung der Detektoranordnung 2.9 zur Abtastung eines linearen Maßstabes und nicht eines gekrümmt auf einer Trommeloberfläche angeordneten Maßbandes 1, wie in Figur 6 dargestellt) die Phase des periodischen Vernier-Streifenmusters auf der Länge einer Vernier-Periode jeweils um 360° zunimmt; dies entspricht einem sägezahnförmigen Phasenverlauf.

Umfasst die Detektoranordnung 2.9 insgesamt N*4 Detektorelemente E, die in der beschriebenen Weise mit einer Vernier-Periode P periodisch angeordnet sind, so wird jede Phase des Vernier-Streifenmusters an insgesamt N äquidistanten Positionen (mit dem Abstand A der Detektoranordnung 2.9 ausgelesen.

Gemäß den Figuren 5 und 6 ist jedem Detektorelement E der Detektoranordnung 2.9 ein als Steg S bezeichneter Teilbereich der Abtaststruktur 2.4 zugeordnet. Die Stege S sind ebenso wie die Detektorelemente E der Detektoranordnung 2.9 entlang einer tangential zur Messrichtung R verlaufenden Erstreckungsrichtung x hintereinander angeordnet und dabei entlang einer senkrecht zu jener Erstreckungsrichtung x verlaufenden Richtung y länglich ausgebildet. Die Stege S bilden dabei in der Draufsicht - ebenso wie die Detektorelemente E-jeweils längliche Rechtecke.

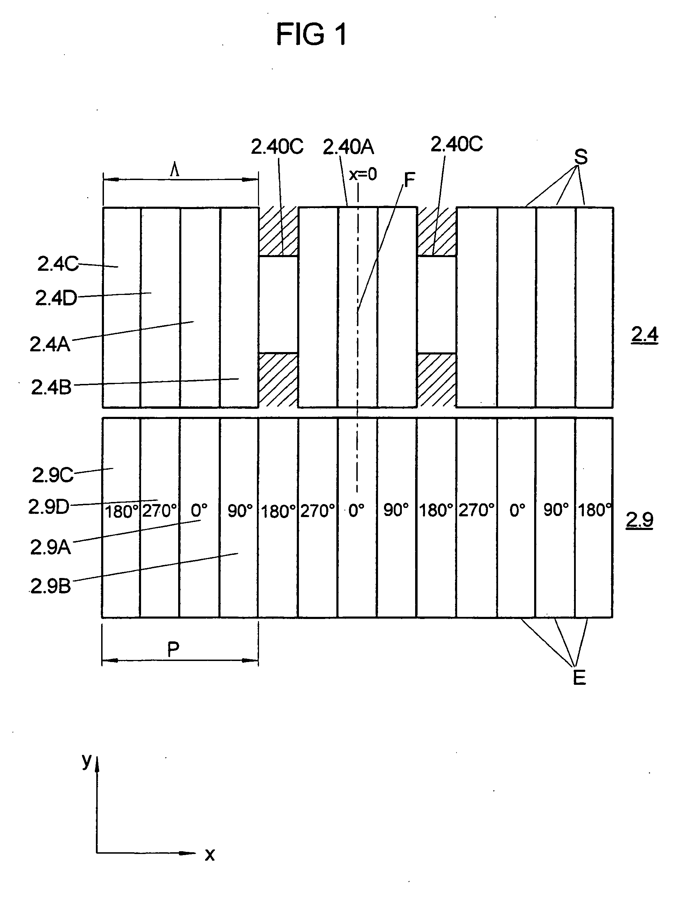

Die Detektoranordnung 2.9 und die zugehörige Abtaststruktur 2.4 sind in Figur 5 zur Illustration des vorbeschriebenen Zusammenhanges nebeneinanderliegend dargestellt. Die tatsächliche Einbaulage ergibt sich jedoch aus der in Figur 6 gezeigten Positionsmesseinrichtung. Die Darstellung in Figur 5 (sowie in entsprechender Weise in den nachfolgend zu erörternden Figuren 1 bis 4) wurde lediglich gewählt, um die Zuordnung jeweils eines Steges S der Abtaststruktur 2.4 zu genau einem Detektorelement E der Detektoranordnung 2.9 zu veranschaulichen.

Die Abtaststruktur 2.4 ist dabei derart in Stege S unterteilt, dass jeder Steg S der Abtaststruktur 2.4 einen Bereich der Abtaststruktur angibt, der einem bestimmten Detektorelement E der Detektoranordnung 2.9 zugeordnet ist. Mit anderen Worten ausgedrückt, trägt jeder Steg S der Abtaststruktur 2.4 zu einem bestimmten Phasenanteil der mittels der Detektoranordnung 2.9 erzeugten Ausgangssignale I_{A}, I_{B}, I_{C} und I_{D} bei. Die Stege S können dementsprechend derart in Untergruppen 2.4A, 2.4B, 2.4C und 2.4D unterteilt werden, dass jede der Untergruppen 2.4A, 2.4B, 2.4C, und 2.4D der Stege S genau einer Untergruppe 2.9A, 2.9B, 2.9C bzw. 2.9D der Detektoranordnung 2.9 zugeordnet ist. So sind etwa die Stege S in der ersten Untergruppe 2.4A den Detektorelementen E der ersten Untergruppe 2.9A der Detektoranordnung 2.9 zugeordnet und tragen bei zur Erzeugung des Ausgangssignales I_{A} mit dem Phasenwinkel 0°. Die Stege S einer zweiten Untergruppe 2.4B sind der zweiten Untergruppe 2.9B der Detektoranordnung 2.9 zugeordnet und tragen bei zur Erzeugung des Ausgangssignales I_{B} mit dem Phasenwinkel 90°. Die Stege S einer dritten Untergruppe 2.4C sind den Detektorelementen E der dritten Untergruppe 2.9C der Detektoranordnung 2.9 zugeordnet und tragen bei zur Erzeugung des Ausgangssignales I_{c} mit einem Phasenwinkel von 180°. Die Stege S einer vierten Untergruppe 2.4D sind schließlich den Detektorelementen E der vierten Untergruppe 2.9D der Detektoranordnung 2.9 zugeordnet und tragen bei zur Erzeugung der Ausgangssignale I_{D} mit einem Phasenwinkel von 270°.

In entsprechender Weise wie den Detektorelementen E kann auch den Stegen S eine definierte Periode A zugeordnet werden, wobei innerhalb einer Periode A jeweils vier Stege S zusammengefasst sind, die vier unterschiedlichen Detektorelementen E zugeordnet sind, nämlich ein Steg aus der ersten Untergruppe 2.4A, der einem Detektorelement der Phase 0° zugeordnet ist, ein Steg aus der zweiten Untergruppe 2.4B, der einem Detektorelement der Phase 90° zugeordnet ist; ein Steg aus der dritten Untergruppe 2.4C, der einem Detektorelement der Phase 180° zugeordnet ist, sowie ein Steg aus der vierten Untergruppe 2.4D, der einem Detektorelement der Phase 270° zugeordnet ist.

Dabei lassen sich wiederum jeweils zwei der Untergruppen 2.4A und 2.4C bzw. 2.4B und 2.4D der Stege S so zusammenfassen, dass sich zwei Gesamtheiten an Stegen S (bestehend aus der ersten und dritten Untergruppe 2.4A und 2.4C einerseits sowie der zweiten und vierten Untergruppe 2.4B und 2.4D andererseits) bilden lassen, die jeweils den Detektorgruppen 2.9A, 2.9C bzw. 2.9B, 2.9D zugeordnet sind und die zur Erzeugung je eines der beiden Inkrementalsignale I₁, I₂ beitragen.

Aus Figur 5 ergibt sich unmittelbar, dass der Flächenschwerpunkt der Detektorgruppe 2.9A, 2.9C, mit der das erste Inkrementalsignal I₁ erzeugt wird, in Erstreckungsrichtung x um P/8 und der Flächenschwerpunkt der Detektorgruppe 2.9B, 2.9D, mit der das zweite Inkrementalsignal I₂ erzeugt wird, in Erstreckungsrichtung x um -P/8 bezüglich der Symmetrieachse (x = 0) der in Figur 5 dargestellten Detektoranordnung 2.9 verschoben ist. Der jeweilige Flächenschwerpunkt wird dabei aus den Flächen berechnet, die von den Detektorelementen E der jeweiligen Detektorgruppe 2.9A, 2.9C bzw. 2.9B, 2.9D überdeckt werden.

Dieser Flächenschwerpunkt wird auch als Phasenschwerpunkt bezeichnet, da den beiden Detektorgruppen 2.9A, 2.9C einerseits sowie 2.9B, 2.9D andererseits jeweils Inkrementalsignale I₁ bzw. I₂ unterschiedlicher Phase zugeordnet sind. Dementsprechend liegt der Phasenschwerpunkt des ersten Inkrementalsignales I₁ bei P/8 und der Phasenschwerpunkt des zweiten Inkrementalsignales I₂ bei -P/8 bezogen auf die Symmetrieachse (x = 0) der Detektoranordnung 2.9.

Die Symmetrieachse (x = 0) der Detektoranordnung 2.9 ist dabei in Figur 5 beispielhaft für einen Fall dargestellt, in dem die Detektoranordnung insgesamt 12 Detektorelemente E, gruppiert zu drei Perioden, umfasst. Die vorstehende Betrachtung gilt aber entsprechend für Detektoranordnungen einer größeren Anzahl an Detektorelementen E und dementsprechend einer größeren Anzahl an Perioden.

Wird die in Figur 5 dargestellte Detektoranordnung 2.9 mit der zugeordneten Abtaststruktur 2.4 zur Abtastung einer gekrümmten Maßverkörperung 1.2 (vergleiche Figur 6) verwendet, also etwa einer Maßverkörperung 1.2, die auf einem Maßband 1 vorgesehen ist, welches sich entlang des äußeren Umfanges einer Trommel erstreckt, so hat die Phase des bei der Abtastung erzeugten Vernier-Streifenmusters nicht mehr den exakten Sägezahnverlauf, der oben für den Fall der Abtastung eines linearen Maßstabs beschrieben wurde. Somit detektieren die einzelnen Untergruppen 2.9A, 2.9B, 2.9C und 2.9D der Detektoranordnung 2.9 nicht mehr jeweils N exakt gleiche Phasen des Vernier-Streifenmusters (N gibt die Anzahl der Perioden der Detektoranordnung an.), sondern sie sind um eine Sollphase verteilt. Dies führt wegen des unterschiedlichen Flächenschwerpunktes (Phasenschwerpunktes) der beiden Inkrementalsignale I₁, I₂ zu einem Phasenwinkelfehler zwischen den beiden Inkrementalsignalen. Zur Behebung dieses Problems sind die in den Figuren 1 bis 4 dargestellten Anordnungen vorgesehen, die jeweils durch eine spezielle Ausbildung der Abtaststruktur 2.4 charakterisiert sind. Die Detektoranordnung 2.9 bleibt demgegenüber unverändert, so dass keine spezielle Detektoranordnung für die Abtastung gekrümmter Maßverkörperungen erforderlich ist.

Erforderlich ist vielmehr lediglich eine spezielle Ausbildung der jeweiligen Abtaststruktur, die typischerweise auf einem Trägersubstrat, z. B. in Form von Glas, vorgesehen ist, z. B. durch Ausbildung einer Teilungsstruktur auf einer Oberfläche des entsprechenden transparenten Trägersubstrates. Die jeweilige Teilungsstruktur kann dabei durch alternierend in Erstreckungsrichtung x angeordnete, periodische Amplituden- und/oder Phasenstrukturen gebildet werden. Eine Amplitudenstruktur ergibt sich z. B. durch die periodisch abwechselnde Anordnung lichtdurchlässiger und lichtundurchlässiger Teilungsstriche. Eine periodische Phasenstruktur wird demgegenüber durch eine periodische Anordnung von Teilungsstrichen mit unterschiedlicher phasenverschiebender Wirkung erreicht.

Die Ausbildung der einzelnen Teilungsstriche zur Erzeugung einer für die Abtaststruktur 2.4 geeigneten Teilungsstruktur ist vorliegend nicht von Bedeutung. Es kommt hier nicht auf die Feinstruktur der Teilungsstruktur an, sondern lediglich auf die hier als Stege S bezeichneten Teilbereiche der Abtaststruktur, die jeweils eine Mehrzahl Teilungsperioden der feineren Teilungsstruktur umfassen und die jeweils einem bestimmten Detektorelement E zugehörigen Detektoranordnung 2.9 zugeordnet sind.

Der Grundgedanke der in den Figuren 1 bis 4 dargestellten Ausführungsbeispiele der Erfindung besteht dabei jeweils darin, die Abtaststruktur so zu gestalten, dass die Flächenschwerpunkte (Phasenschwerpunkte) beider Gesamtheiten an Stegen S der Abtaststruktur 2.4 (wobei die eine Gesamtheit 2.4A, 2.4C an Stegen S durch die erste Untergruppe 2.4A und die dritte Untergruppe 2.4C gebildet wird und die zweite Gesamtheit 2.4B, 2.4D an Stegen S durch die zweite und vierte Untergruppe 2.4B und 2.4D gebildet wird) in einem einzigen Flächen- bzw. Phasenschwerpunkt F zusammenfallen.

Dass beide Gesamtheiten an Stegen S (2.4A, 2.4C einerseits und 2.4B, 2.4D andererseits) den gleichen Flächenschwerpunkt F aufweisen bzw. deren beide Flächenschwerpunkte F zusammenfallen, bedeutet hier, dass die beiden (zusammenfallenden) Flächenschwerpunkte die gleiche Koordinate (x=0) auf der in Erstreckungsrichtung x der Abtaststruktur 2.4 verlaufenden x-Achse aufweisen.

Hierzu wird die Abtaststruktur 2.4 bei jedem der in den Figuren 1 bis 4 dargestellten Ausführungsbeispiele jeweils so gestaltet, dass eine der Gesamtheiten (z.B. 2.4A, 2.4C) an Stegen S einen Steg mehr aufweist als die andere Gesamtheit (z.B. 2.4B, 2.4D) an Stegen S. Eine jeweilige Gesamtheit 2.4A, 2.4C bzw. 2.4B, 2.4D ist dabei weiterhin jeweils dadurch charakterisiert, dass sie einer Detektorgruppe 2.9A, 2.9C bzw. 2.9B, 2.9D der Detektoranordnung 2.9 zugeordnet ist, so dass sie zur Erzeugung jeweils genau eines der beiden Inkrementalsignale I₁ bzw. I₂ der Detektoranordnung 2.9 beiträgt. Mit anderen Worten ausgedrückt, sind die einer Gesamtheit an Stegen zugeordneten Stege S jeweils dadurch charakterisiert, dass alle die Stege S einer Gesamtheit jeweils den Detektorelementen E der Detektoranordnung 2.9 zugeordnet sind, welche zur Bildung einer Detektorgruppe bzw. eines hieraus resultierenden Inkrementalsignals elektrisch miteinander verschaltet sind.

Figur 1 zeigt eine Abtaststruktur 2.4, bei der die durch die erste und dritte Untergruppe 2.4A und 2.4C gebildete Gesamtheit an Stegen S einen Steg mehr aufweist als die durch die zweite und vierte Untergruppe 2.4B und 2.4D gebildete Gesamtheit an Stegen. Um hierbei sicherzustellen, dass beide Gesamtheiten an Stegen S den gleichen Beitrag zum jeweiligen Inkrementalsignal I₁ bzw. I₂ liefern, sind zwei Stege 2.40C der dritten Untergruppe 2.4C in ihrer Ausdehnung reduziert, und zwar in der Weise, dass sie nur eine halb so große Ausdehnung in der Richtung y senkrecht zur Erstreckungsrichtung x der Abtaststruktur 2.4 aufweisen wie die übrigen Stege S der Abtaststruktur 2.4. Jene Reduzierung der Ausdehnung einzelner Stege 2.40C der Abtastanordnung 2.4 wird dadurch erreicht, dass an den verbleibenden kleineren Stegen 2.40C entlang der besagten Richtung y nach oben und unten hin angrenzende Bereiche (mit Bezug auf eine optische Abtastung) inaktiv, insbesondere absorbierend, ausgestaltet werden. Diese Bereiche sind in den Figuren 1 bis 4 jeweils schraffiert dargestellt.

Der Begriff "optisch inaktiv" ist dabei in der Weise zu verstehen, dass als optisch nicht aktiv bzw. inaktiv bezeichnete Bereiche der mit der Abtaststruktur 2.4 versehenen Abtastplatte nicht zu dem an der Detektoranordnung 2.9 zu erfassenden Vernier-Streifenmuster und somit auch nicht zu den hierbei erzeugten Inkrementalsignalen I₁, I₂ beitragen.

Insgesamt ergibt sich so eine Anordnung der Stege S der Abtaststruktur, bei der der Flächenschwerpunkt F der Gesamtheiten 2.4A, 2.4C einerseits und 2.4B, 2.4D andererseits jeweils in einem Steg 2.40A der ersten Untergruppe 2.4A an Stegen S liegt und zwar in der Weise, dass eine senkrecht zur Erstreckungsrichtung x durch den Flächenschwerpunkt F verlaufende Achse (x=0) eine Symmetrieachse des besagten Steges 2.40A bildet, also jenen genau mittig schneidet. Die beiden Stege 2.40C mit reduzierter Ausdehnung stammen aus der anderen Untergruppe (dritten Untergruppe 2.4C) derselben Gesamtheit 2.4A, 2.4C an Stegen und sind symmetrisch bezüglich der durch den Flächenschwerpunkt F verlaufenden Achse x=0 angeordnet. Im Ergebnis ist die gesamte aus der ersten und dritten Untergruppe 2.4A, 2.4C bestehenden Gesamtheit an Stegen S spiegelsymmetrisch bezüglich der Symmetrieachse x=0 angeordnet, d.h., in gleichem Absatz beidseits der Symmetrieachse x=0 liegen jeweils Stege S, die Detektorelementen E gleicher Phase (vorliegend 0° oder 180°) zugeordnet sind. Konkret ist dabei der von der Symmetrieachse x=0 geschnittene Steg 2.40A einem Detektorelement der Phase 0° zugeordnet, während die beiden spiegelsymmetrisch bezüglich der Symmetrieachse x=0 angeordneten Stege 2.40C jeweils mit gleichem Abstand beidseits der Symmetrieachse x=0 angeordnet sind. Hieraus folgt, dass der Flächenschwerpunkt F der Fläche, welcher von den Stegen S der ersten und dritten Untergruppe 2.4A, 2.4C auf dem zugehörigen Substrat (z.B. Glassubstrat) gebildet wird, mit jener Symmetrieachse x=0 zusammenfällt.

Entsprechendes gilt erkennbar auch für die Gesamtheit der Stege S aus der zweiten und vierten Untergruppe 2.4B und 2.4D, wobei hier allerdings nicht die einzelnen Stege S - bezogen auf die Phase des jeweils zugehörigen Detektorelementes E - symmetrisch bezüglich der durch den Flächenschwerpunkt F verlaufenden Symmetrieachse x=0 angeordnet sind. Vielmehr sind hier in gleichem Abstand beidseits der Symmetrieachse x=0 jeweils immer ein Steg S mit zugeordnetem Detektorelement E der Phase 90° und ein Steg S mit zugeordnetem Detektorelement E der Phase 270° angeordnet. Dies führt zwar zu einer symmetrischen Ausbildung der zweiten Gesamtheit 2.4B, 2.4D an Stegen insgesamt bezüglich der Symmetrieachse x=0 und auch dazu, dass deren Flächenschwerpunkt F ebenfalls auf der Symmetrieachse x=0 liegt und mit dem Flächenschwerpunkt der ersten Gesamtheit 2.4A, 2.4C an Stegen zusammenfällt; jedoch sind die zweite und vierte Untergruppe 2.4B bzw. 2.4D für sich betrachtet nicht symmetrisch bezüglich der Symmetrieachse x=0 angeordnet.

Zusammenfassend liegen die Stege S der ersten Untergruppe 2.4A jeweils an den Stellen n*Λ; die Stege S der zweiten Untergruppe 2.4B jeweils an den Stellen (n+1/4)*Λ; die Stege S der dritten Untergruppe 2.4C jeweils an den Stellen (n+1/2)*Λ und schließlich die Stege S der vierten Untergruppe 2.4D an den Stellen (n+3/4)*Λ, wobei n ein Element der Menge Z der positiven und negativen ganzen Zahlen einschließlich der 0 ist.

In dem in Figur 1 gezeigten Ausführungsbeispiel sind die beiden Stege 2.40C, welche der dritten Untergruppe 2.4C angehören, an den Stellen ±1/2*Λ vorgesehen. Diese Lage ist jedoch nicht zwingend; entscheidend ist die symmetrische Anordnung der beiden Stege 2.40C reduzierter Ausdehnung bezüglich der Symmetrieachse x=0. Es können für die Lage dieser beiden Stege 2.40C daher beliebige symmetrisch bezüglich der Symmetrieachse x=0 liegende Stellen gemäß der Formel (n+1/2)*Λ gewählt werden.

Von Bedeutung ist, dass mit der beschriebenen Anordnung und Ausbildung der Abtaststruktur 2.4 erreicht wird, dass auch an der Detektoranordnung 2.9 in entsprechender Weise die Flächenschwerpunkte beider Detektorgruppen (nämlich der aus der ersten und dritten Untergruppe 2.9A, 2.9C bestehenden ersten Detektorgruppe einerseits und der aus der zweiten und vierten Untergruppe 2.9B, 2.9D bestehenden zweiten Detektorgruppe andererseits) in einem Punkt zusammenfallen, der auf einer Achse (x=0) liegt, die ein Detektorelement E (mit der Phase 0°) schneidet und dieses symmetrisch teilt. Alle Detektorelemente E (mit den Phasen 0° oder 180°), die der ersten Detektorgruppe 2.9A, 2.9C angehören, sind dementsprechend symmetrisch bezüglich jener Symmetrieachse x=0 angeordnet. Ferner sind die aus der zweiten Detektorgruppe 2.9B, 2.9D stammenden Detektorelemente E (mit Phasen 90° oder 270°) in ihrer Gesamtheit betrachtet, ebenfalls symmetrisch bezüglich der Symmetrieachse x=0 angeordnet. Dies gilt jedoch nicht für die beiden einzelnen zugehörigen Untergruppen 2.9B bzw. 2.9D für sich betrachtet. Vielmehr ist in gleichem Abstand beidseits der Symmetrieachse x=0 immer jeweils einem Detektorelement E der zweiten Untergruppe 2.9B (mit der Phase 90°) symmetrisch gegenüberliegend ein Detektorelement E der vierten Untergruppe 2.9D (mit der Phase 270°) angeordnet. Insofern ist die Symmetrie der zweiten Detektorgruppe 2.9B, 2.9D bezüglich der Symmetrieachse x=0 geringer als die Symmetrie der ersten Detektorgruppe 2.9A, 2.9C, bei der in gleichem Abstand beidseits der Symmetrieachse x=0 stets Detektorelement E gleicher Phase (0° oder 180°) angeordnet sind.

Die Gesamtlänge der in Figur 1 dargestellten Abtaststruktur 2.4 beträgt (N+1/4)*Λ, wobei N die Gesamtzahl an vorhandenen Perioden angibt und die zusätzliche Länge von 1/4*Λ von dem einen zusätzlichen Steg S herrührt, so dass die eine Gesamtheit 2.4A, 2.4C an Stegen S genau einen Steg mehr aufweist als die der anderen Gesamtheit 2.4B, 2.4D.

Hinsichtlich der Detektoranordnung 2.9 ist keine (der speziellen Ausbildung der Abtaststruktur) entsprechende Anpassung bei der Anordnung und Ausbildung der Detektorelemente E erforderlich. Denn diese tragen zu den zu erzeugenden Ausgangssignalen l_{A}, l_{B}, l_{c} und l_{D} sowie den hieraus gebildeten Inkrementalsignalen I₁ und I₂ jeweils nur in dem Umfang bei, in dem ihnen ein Steg S bestimmter Größe auf der Abtaststruktur 2.4 zugeordnet ist. Das heißt, eine spezielle Ausbildung der Detektoranordnung 2.9 ist für die Erreichung der vorbeschriebenen Symmetrie bei Gewährleistung eines gleichen Beitrages beider Detektorgruppen (2.9A, 2.9C einerseits und 2.9B, 2.9D andererseits) nicht erforderlich. Dies wird allein durch die Ausbildung der Abtaststruktur 2.4 gewährleistet.

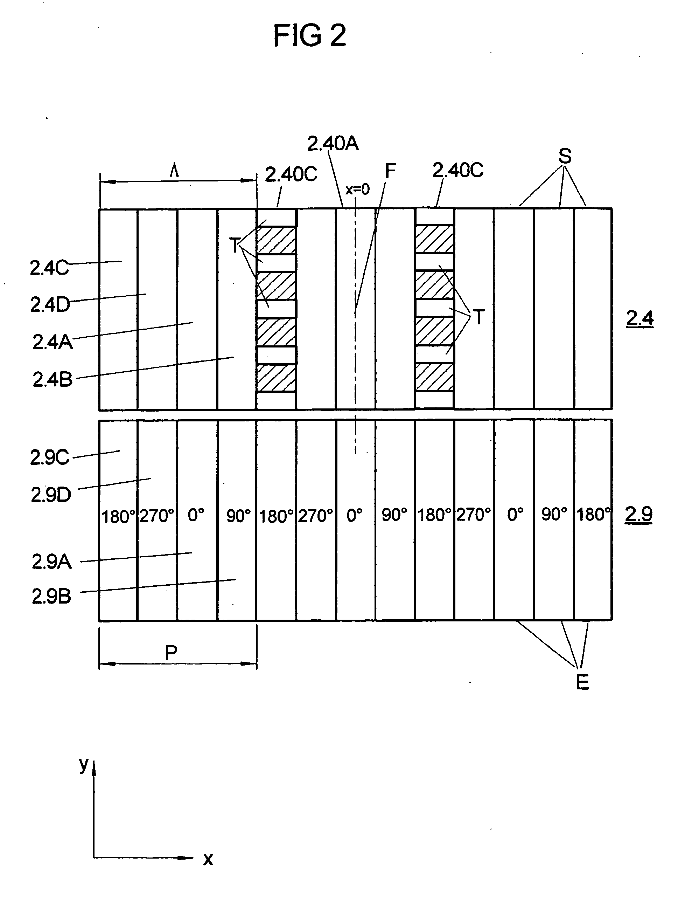

Figur 2 eine Abwandlung des Ausführungsbeispiels aus Figur 1, wobei der Unterschied darin besteht, dass die beiden symmetrisch beidseits der Symmetrieachse x=0 angeordneten Stege 2.40C reduzierter Fläche gebildet sind durch mehrere Teilabschnitte T (Stegbereiche), die entlang einer Richtung y senkrecht zur Erstreckungsrichtung x der Abtaststruktur 2.4 durch inaktive Bereiche voneinander beabstandet hintereinander angeordnet sind. Wie im Fall der Figur 1 sind dabei auch vorliegend jene beiden Stege 2.40C so ausgebildet, dass sie symmetrisch bezüglich einer in Erstreckungsrichtung x verlaufenden Mittelachse der Abtaststruktur 2.4 sind.

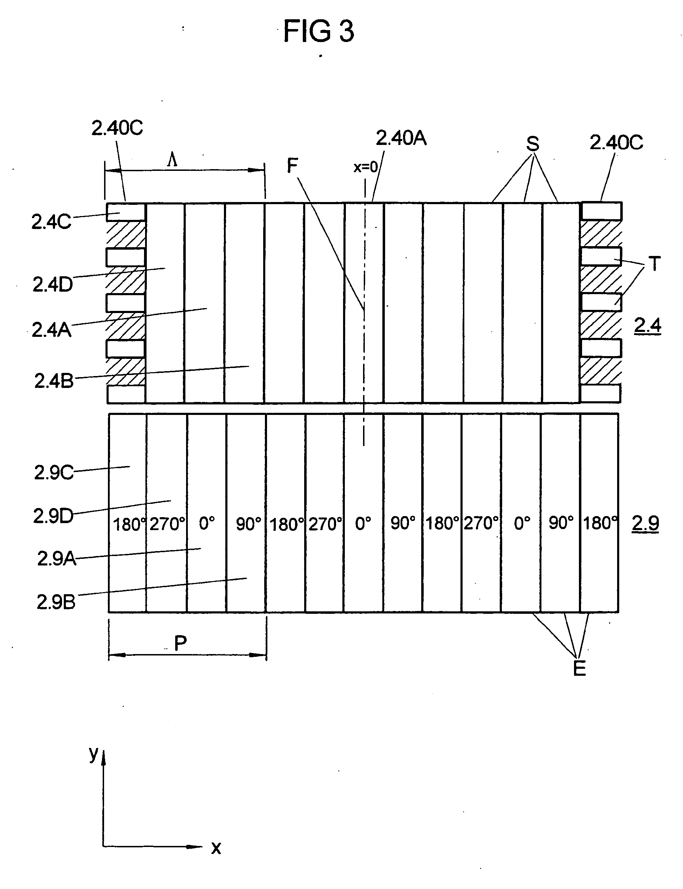

Figur 3 zeigt eine weitere Abtaststruktur und eine Detektoranordnung, bei der die beiden Stege 2.40C der dritten Untergruppe 2.4C mit reduzierter Fläche nicht (wie im Fall der Figuren 1 und 2) an den Stellen ±1/2*Λ, sondern vielmehr an den Stellen ±3/2*Λ liegen.

In diesem Zusammenhang sei auch darauf hingewiesen, dass die Figuren 1 bis 3 jeweils nur zentrale Ausschnitte der betrachteten Abtaststruktur 2.4 bzw. Detektoranordnung 2.9 zeigen. Diese können in symmetrischer Weise (beidseits der jeweiligen Symmetrieachse x=0) jeweils um eine beliebige (technisch sinnvolle) Anzahl an Perioden A bzw. P fortgesetzt sein.

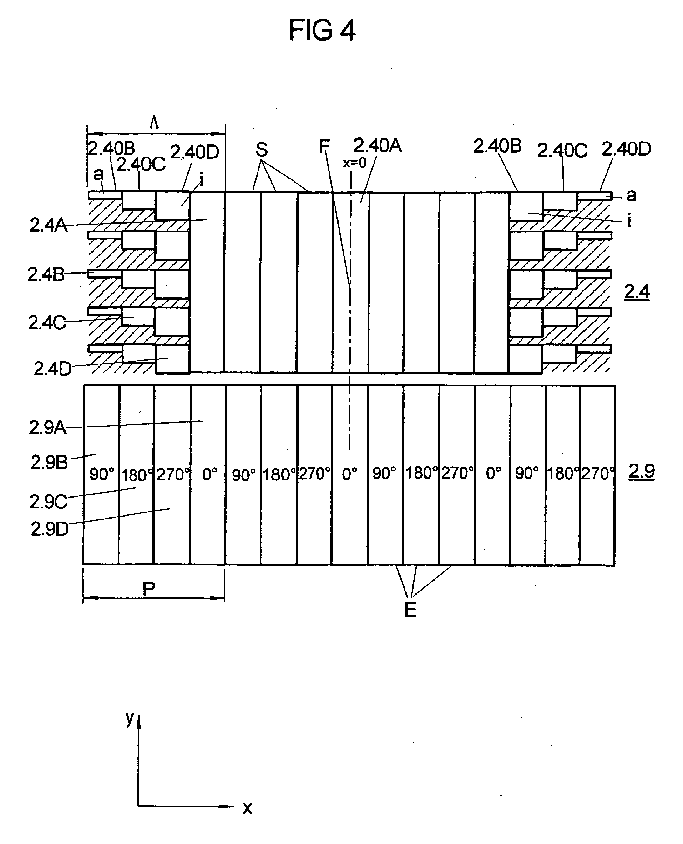

In Figur 4 ist eine weitere Abtaststruktur und eine Detektoranordnung dargestellt, bei dem nicht nur - wie in den Figuren 1 bis 3 - der Flächenschwerpunkt F der ersten Untergruppe 2.4A und der dritten Untergruppe 2.4C an Stegen S jeweils für sich betrachtet, sondern auch der Flächenschwerpunkt F der zweiten Untergruppe 2.4 B und vierten Untergruppe 2.4D an Stegen S für sich betrachtet mit dem Flächenschwerpunkt F der gesamten Anordnung zusammenfällt. Hierzu sind nicht nur-wie bei den vorhergehenden Beispielen - zwei symmetrisch zur durch den Flächenschwerpunkt F verlaufenden Symmetrieachse x = 0 angeordnete Stege 2.40C der dritten Untergruppe 2.4C mit reduzierter Fläche vorgesehen, sondern auch jeweils zwei Stege 2.40B bzw. 2.40D reduzierter Fläche der zweiten Untergruppe 2.4B und vierten Untergruppe 2.4D an Stegen. Da diese jeweils einer Untergruppe, nämlich der zweiten Untergruppe 2.4B oder der vierten Untergruppe 2.4D zugehörigen Stege 2.40B bzw. 2.40D nicht symmetrisch bezüglich der Symmetrieachse x = 0 durch den Flächenschwerpunkt F angeordnet sind, ist es erforderlich, dass die jeweils eine reduzierte Fläche aufweisenden Stegen 2.40B bzw. 2.40D der zweiten und vierten Untergruppe 2.4B bzw. 2.4D, je nach ihrem Abstand von der Symmetrieachse x = 0, unterschiedlich große Flächen aufweisen, um einen Zusammenfall des jeweiligen Flächenschwerpunktes F mit der Symmetrieachse x = 0 zu erreichen. Dementsprechend ist von jedem Paar an Stegen 2.40B bzw. 2.40D aus der zweiten und vierten Untergruppe mit reduzierter Fläche jeweils ein weiter von der Symmetrieachse x = 0 entfernter Steg 2.40B (a) bzw. 2.40D (a) hinsichtlich seiner Fläche stärker reduziert als der jeweils weiter innen liegende (also weniger weit von der Achse x = 0) entfernte Partner 2.40B (i) bzw. 2.40D (i). Zur besseren Erkennbarkeit und Unterscheidung der jeweiligen inneren und äußeren Stege 2.40B bzw. 2.40D sind in Figur 4 die äußeren Stege zusätzlich mit dem Buchstaben a und die inneren Stege mit dem Buchstaben i gekennzeichnet.

Da gemäß dem in Figur 4 dargestellten Beispiel die Stege S der zweiten und vierten Untergruppe 2.4B und 2.4D insgesamt eine stärkere Flächenreduktion aufweisen als die Stege der ersten und dritten Untergruppe 2.4A und 2.4C, weist in diesem Fall die Gesamtheit der Stege der zweiten und vierten Untergruppe 2.4B und 2.4D einen Steg mehr auf als die Stege der ersten und dritten Untergruppe 2.4A und 2.4C. Dabei ist sichergestellt, dass wiederum die insgesamt von den Stegen S der ersten und dritten Untergruppe 2.4A, 2.4C überdeckten Flächen einerseits und die von den Stegen S der zweiten und vierten Untergruppe 2.4 B und 2.4 D überdeckten Flächen andererseits gleich groß sind.

Von Bedeutung ist ferner, dass bei allen vorbeschriebenen Ausführungsbeispielen die von jeder der (vier) verschiedenen Untergruppen 2.4A bzw. 2.4B bzw. 2.4C bzw. 2.4D an Stegen S überdeckte aktive Fläche jeweils gleich groß ist. Hierzu weist bei solchen Untergruppen, die eine größere Anzahl an Stegen S (insbesondere einen Steg mehr) umfassen als andere Untergruppen, zumindest ein Teil der Stege eine entsprechend reduzierte aktive Fläche auf, so dass die gesamte von einer jeweiligen Untergruppe an Stegen überdeckte aktive Fläche jeweils gleich groß ist wie die von jeder einzelnen der anderen (drei) Untergruppen überdeckte aktive Fläche. Dies gewährleistet in vorteilhafter Weise gleiche Signalamplituden der den einzelnen Untergruppen an Stegen zugeordneten Ausgangsignale.

## Patentansprüche

1. Abtasteinheit für eine Positionsmesseinrichtung zum Abtasten einer Maßverkörperung der Positionsmesseinrichtung, mit
- einer auf einem Träger vorgesehenen Abtaststruktur, die derart ausgebildet ist, dass durch Wechselwirkung einer zur Abtastung der Maßverkörperung verwendeten elektromagnetischen Strahlung mit der Maßverkörperung und mit der Abtaststruktur ein periodisches Streifenmuster erzeugt wird, und
- einer Detektoranordnung zur Erfassung des Streifenmusters, die aus einer Mehrzahl hintereinander angeordneter Detektorelemente unterschiedlicher Phasen besteht, welche Ausgangssignale mit einem durch jene Phasen repräsentierten Phasenversatz erzeugen,
wobei die Anordnung der Detektorelemente unterschiedlicher Phasen hintereinander ein periodisches Muster bildet und jedem der Detektorelemente genau ein als Steg bezeichneter Bereich der Abtaststruktur zugeordnet ist und wobei die Detektorelemente derart zu zwei Detektorgruppen zusammengefasst sind, dass zumindest Detektorelemente gleicher Phase jeweils zu derselben Detektorgruppe gehören und die Detektorelemente innerhalb einer Detektorgruppe zur Erzeugung eines Detektorsignales miteinander verschaltet sind,
**dadurch gekennzeichnet,**
- **dass** die Stege (S) der Abtaststruktur (2.4) derart ausgebildet und angeordnet sind, dass die Gesamtheit (2.4A, 2.4C) der der ersten Detektorgruppe (2.9A, 2.9C) und die Gesamtheit (2.4B, 2.4D) der der zweiten Detektorgruppe (2.9B, 2.9D) zugeordneten Stege (S) jeweils eine gleich große bei der Positionsmessung aktive Fläche auf dem Träger der Abtaststruktur (2.4) überdeckt und dass die von der Gesamtheit (2.4A, 2.4C) der ersten Detektorgruppe (2.9A, 2.9C) zugeordneter Stege überdeckte Fläche einerseits und die von der Gesamtheit (2.4B, 2.4D) der zweiten Detektorgruppe (2.9B, 2.9D) zugeordneter Stege überdeckte Fläche andererseits den gleichen Flächenschwerpunkt (F) aufweisen und
- eine der beiden Gesamtheiten (2.4A, 2.4C; 2.4B, 2.4D) an Stegen (S) der Abtaststruktur (2.4) einen Steg mehr aufweist als die andere Gesamtheit (2.4B, 2.4D; 2.4A, 2.4C) an Stegen (S) der Abtaststruktur (2.4) und
- in der Gesamtheit (2.4A, 2.4C; 2.4B; 2.4D) an Stegen (S), die einen Steg mehr aufweist als die andere Gesamtheit (2.4B, 2.4D; 2.4A, 2.4C) an Stegen (S), mindestens zwei symmetrisch bezüglich der durch den Flächenschwerpunkt (F) und senkrecht zur Erstreckungsrichtung (x) verlaufenden Achse (x = 0) angeordnete Stege (2.40C) eine geringere bei der Positionsmessung aktive Fläche aufweisen als die anderen Stege (S) der Abtaststruktur (2.4) und
- die Stege (2.40C) mit reduzierter aktiver Fläche einen geringeren Abstand zur durch den Flächenschwerpunkt (F) laufenden Achse (x=0) aufweisen als die Mehrzahl der restlichen Stege.

2. Abtasteinheit nach Anspruch 1, **dadurch gekennzeichnet, dass** Detektorelemente (E) jeweils einer von vier verschiedenen Phasen (0°, 90°, 180°, 270°) zugeordnet sind und dass die zwei dieser Phasen (0°, 180°) zugeordneten Detektorelemente (E) die erste Detektorgruppe (2.9A, 2.9C) bilden und die den beiden anderen Phasen (90°, 270°) zugeordnete Detektorelemente (E) die zweite Detektorgruppe (2.9B, 2.9D) bilden.

3. Abtasteinheit nach Anspruch 1 oder 2, **dadurch gekennzeichnet, dass** die verschiedenen Phasen (0°, 90°, 180°, 270°) zugeordneten Detektorelemente (E) abwechselnd hintereinander angeordnet sind, so dass zwischen zwei Detektorelementen (E) gleicher Phase jeweils ein Detektorelement (E) jeder anderen Phase liegt.

4. Abtasteinheit nach einem der vorhergehenden Ansprüche, **dadurch gekennzeichnet, dass** die Gesamtheit (2.4A, 2.4C; 2.4B, 2.4D) der den Detektorelementen (E) mindestens einer der beiden Detektorgruppen (2.9A, 2.9C; 2.9B, 2.9D) zugeordneten Stege (S) der Abtaststruktur (2.4) symmetrisch bezüglich einer durch den Flächenschwerpunkt (F) senkrecht zur Erstreckungsrichtung (x) der Abtaststruktur (2.4) verlaufenden Achse (x = 0) angeordnet ist.

5. Abtasteinheit nach einem der vorhergehenden Ansprüche, **dadurch gekennzeichnet, dass** der Flächenschwerpunkt (F) in einem der Stege (2.40A) der Abtaststruktur (2.4) liegt, so dass dieser Steg (2.40A) symmetrisch bezüglich einer durch den Flächenschwerpunkt (F) senkrecht zur Erstreckungsrichtung (x) der Abtaststruktur (2.4) verlaufenden Achse (x = 0) ausgebildet ist.

6. Abtasteinheit nach Anspruch 4 und 5, **dadurch gekennzeichnet, dass** die Stege (S) derjenigen Gesamtheit (2.4A, 2.4C) an Stegen, zu der der eine Steg (2.40A) gehört, in dem der Flächenschwerpunkt (F) liegt, symmetrisch bezüglich der durch den Flächenschwerpunkt (F) und senkrecht zur Erstreckungsrichtung (x) verlaufenden Achse (x = 0) angeordnet sind.

7. Abtasteinheit nach Anspruch 4, **dadurch gekennzeichnet, dass** beide Gesamtheiten (2.4A, 2.4C; 2.4B, 2.4D) an Stegen (S) symmetrisch bezüglich der durch den Flächenschwerpunkt (F) und senkrecht zur Erstreckungsrichtung (x) verlaufenden Achse (x = 0) angeordnet sind.

8. Abtasteinheit nach Anspruch 1, **dadurch gekennzeichnet, dass** derjenige Steg (2.40C) mit reduzierter aktiver Fläche eine geringeren Ausdehnung in einer Richtung (y) quer zu der Erstreckungsrichtung (x) aufweist, entlang der die Stege (S) hintereinander angeordnet sind, als die übrigen Stege (S).

9. Abtasteinheit nach Anspruch 8, **dadurch gekennzeichnet, dass** der jeweilige Steg (2.40C) mit reduzierter aktiver Fläche aus einer Mehrzahl voneinander beabstandeter Stegbereiche (T) besteht.

10. Abtasteinheit nach Anspruch 9, **dadurch gekennzeichnet, dass** die Stegbereiche (T) entlang einer Richtung (y) voneinander beabstandet sind, die quer zu der Erstreckungsrichtung (x) verläuft, entlang der die Stege (S) hintereinander angeordnet sind.

11. Abtasteinheit nach einem der vorhergehenden Ansprüche, **dadurch gekennzeichnet, dass** der jeweilige Steg (2.40C) mit reduzierter aktiver Fläche symmetrisch bezüglich einer entlang der Erstreckungsrichtung (x) der Abtaststruktur (2.4) verlaufenden Achse ausgebildet ist.

12. Abtasteinheit nach Anspruch 5 und einem der Ansprüche 8 bis 11, **dadurch gekennzeichnet, dass** die Stege (2.40C) mit reduzierter aktiver Fläche Detektorelementen (E) einer anderen Phase (90°, 180°, 270°) zugeordnet sind, als der Steg (2.40A), in dem der Flächenschwerpunkt (F) liegt.

13. Abtasteinheit nach Anspruch 2 und nach Anspruch 4 oder einem der Ansprüche 5 bis 12, soweit rückbezogen auf Anspruch 4, **dadurch gekennzeichnet, dass** bei einer Gesamtheit (2.4A, 2.4C) an Stegen (S), die symmetrisch bezüglich der durch den Flächenschwerpunkt (F) verlaufenden Achse (x = 0) angeordnet ist, alle diejenigen Stege, die Detektorelementen (E) mit derselben Phase (0° oder 180°) zugeordnet sind, jeweils symmetrisch bezüglich der durch den Flächenschwerpunkt (F) verlaufenden Achse (x = 0) angeordnet sind.

14. Abtasteinheit nach Anspruch 13, **dadurch gekennzeichnet, dass** der Flächenschwerpunkt der aktiven Flächen derjenigen Untergruppe (2.4A oder 2.4C) an Stegen (S), die innerhalb der besagten Gesamtheit (2.4A, 2.4C) Detektorelementen (E) derselben Phase (0° oder 180°) zugeordnet ist, jeweils mit dem Flächenschwerpunkt (F) der aktiven Flächen aller Stege (S) dieser Gesamtheit (2.4A, 2.4C) an Stegen (S) zusammenfällt.

15. Abtasteinheit nach einem der vorhergehenden Ansprüche, **dadurch gekennzeichnet, dass** die Flächenschwerpunkte der aktiven Flächen sämtlicher Untergruppen (2.4A, 2.4B, 2.4C, 2.4D), die jeweils Detektorelementen (E) derselben Phase (0°, 90°, 180° oder 270°) zugeordnet sind, jeweils mit dem Flächenschwerpunkt (F) der beiden Gesamtheiten (2.4A, 2.4C; 2.4B, 2.4D) an Stegen (S) zusammenfallen.

16. Abtasteinheit nach Anspruch 5 und 15, **dadurch gekennzeichnet, dass** jede Untergruppe (2.4B, 2.4C, 2.4D) an Stegen (S), die nicht den symmetrisch bezüglich der durch den Flächenschwerpunkt (F) verlaufenden Achse (x=0) ausgebildeten Steg (2.40A) aufweist, mindestens zwei Stege (2.40C) mit gegenüber den weiteren Stegen (S) reduzierter aktiver Fläche aufweist.

17. Abtasteinheit nach einem der vorhergehenden Ansprüche, **dadurch gekennzeichnet, dass** die Abtaststruktur (2.4) auf einer Abtastplatte (2.3) ausgebildet ist.

18. Abtasteinheit nach einem der vorhergehenden Ansprüche, **dadurch gekennzeichnet, dass** die Detektorelemente (E), denen die Stege (S) der Abtaststruktur (2.4) zugeordnet sind, in derselben Reihenfolge hintereinander angeordnet sind, wie die jeweils zugeordneten Stege (S) der Abtaststruktur (2.4).

## Claims

1. A scanning unit for a position measuring device for scanning a material measure of the position measuring device comprising
- a scanning structure provided on a support, which is embodied in such a manner that a periodic fringe pattern is generated by means of the interaction of electromagnetic radiation, which is used for scanning the material measure, with the material measure and with the scanning structure and
- a detector arrangement for detecting the fringe pattern, said detector arrangement consisting of a plurality of detector elements of different phases, which are arranged behind one another, and which generate output signals with a phase shift, which is represented by those phases, wherein the arrangement of the detector elements of different phases behind one another forms a periodic pattern and exactly one area of the scanning structure identified as bar is assigned to each of the detector elements and wherein the detector elements are combined to form two detector groups in such a manner that at least detector elements of the same phase in each case belong to the same detector group and the detector elements are interconnected with one another within a detector group for the purpose of generating a detector signal,
**characterized in**
- **that** the bars (S) of the scanning structure (2.4) are embodied and arranged in such a manner that the totality (2.4A, 2.4C) of the bars (S) assigned to the first detector group (2.9A, 2.9C) and the totality (2.4B, 2.4D) of the bars (S) assigned to the second detector group (2.9B, 2.9D) in each case covers an equal surface on the support of the scanning structure (2.4), said surface being active in response to the position measurement and that the surface covered by the totality (2.4A, 2.4C) of the bars assigned to the first detector group (2.9A, 2.9C) one the one hand and the surface covered by the totality (2.4B, 2.4D) of the bars assigned to the second detector group (2.9B, 2.9D) on the other hand encompass the same center of area (F) and
- one of the two totalities (2.4A, 2.4C; 2.4B, 2.4D) at bars (S) of the scanning structure (2.4) encompasses one more bar than the other totality (2.4B, 2.4D; 2.4A, 2.4C) of bars (S) of the scanning structure (2.4) and
- in the totality (2.4A, 2.4C; 2.4B, 2.4D) of bars (S), which encompasses one more bar than the other totality (2.4B, 2.4D; 2.4A, 2.4C) of bars (S), at least two bars (2.40C), which are arranged symmetrically with reference to the axis (x=0), which runs through the center of area (F) and perpendicular to the direction of extension (x), encompass a smaller surface, which is active in response to the position measuring, than the other bars (S) of the scanning structure (2.4) and
- the bars (2.40C) comprising a reduced active surface encompass a smaller distance to the axis (x=0), which runs through the center of area (F), than the plurality of the remaining bars.

2. The scanning unit according to claim 1, **characterized in that** detector elements (E) are in each case assigned to one of four different phases (0°, 90°, 180°, 270°) and that the detector elements (E), which are assigned to two of these phases (0°, 180°), form the first detector group (2.9A, 2.9C) and the detector elements (E) assigned to the two other phases (90°, 270°), form the second detector group (2.9B, 2.9D).

3. The scanning unit according to claim 1 or 2, **characterized in that** the detector elements (E), which are assigned to different phases (0°, 90°, 180°, 270°), are arranged alternately behind one another, so that a detector element (E) of each of the other phase is located in each case between two detector elements (E) of the same phase.

4. The scanning unit according to one of the preceding claims, **characterized in that** the totality (2.4A, 2.4C; 2.4B, 2.4D) of the bars (S) of the scanning structure (2.4), which are assigned to the detector elements (E) of at least one of the two detector groups (2.9A, 2.9C; 2.9B, 2.9D), is arranged symmetrically with reference to an axis (x=0), which runs through the center of area (F) perpendicular to the direction of extension (x) of the scanning structure (2.4).

5. The scanning unit according to one of the preceding claims, **characterized in that** the center of area (F) is located in one of the bars (2.40A) of the scanning structure (2.4), so that this bar (2.40A) is embodied so as to be symmetrical with reference to an axis (x=0), which runs through the center of area (F) perpendicular to the direction of extension (x) of the scanning structure (2.4).

6. The scanning unit according to claim 4 and 5, **characterized in that** the bars (S) of that totality (2.4A, 2.4C) of bars, to which the one bar (2.40A) belongs, in which the center of area (F) is located, are arranged symmetrically with reference to the axis (x=0), which runs through the center of area (F) and perpendicular to the direction of extension (x).

7. The scanning unit according to claim 4, **characterized in that** both totalities (2.4A, 2.4C; 2.4B, 2.4D) of bars (S) are arranged symmetrically with reference to the axis (x=0), which runs through the center of area (F) and perpendicular to the direction of extension (x).

8. The scanning unit according to claim 1, **characterized in that that** bar (2.40C) comprising a reduced active surface encompasses a smaller expansion than the other bars (S) in a direction (y) at right angles to the direction of extension (x), along which the bars (S) are arranged behind one another.

9. The scanning unit according to claim 8, **characterized in that** the respective bar (2.40C) comprising a reduced active surface consists of a plurality of bar areas (T), which are spaced apart from one another.

10. The scanning unit according to claim 9, **characterized in that** the bar areas (T) are spaced apart from one another along a direction (y), which runs at right angles to the direction of extension (x), along which the bars (S) are arranged behind one another.

11. The scanning unit according to one of the preceding claims, **characterized in that** the respective bar (2.40C) comprising a reduced active surface is embodied symmetrically with reference to an axis, which runs along the direction of extension (x) of the scanning structure (2.4).

12. The scanning unit according to claim 5 and one of claims 8 to 11, **characterized in that** the bars (2.40C) comprising a reduced active surface are assigned to detector elements (E) of a different phase (90°, 180°, 270°) than the bar (2.40A), in which the center of area (F) is located.

13. The scanning unit according to claim 2 and according to claim 4 or according to one of claims 5 to 12, as far as dependent on claim 4, **characterized in that** all of those bars, which are assigned to detector elements (E) comprising the same phase (0° or 180°), are in each case arranged symmetrically with reference to the axis (x=0), which runs through the center of area (F) in the case of a totality (2.A, 2.4C) of bars (S), which is arranged symmetrically with reference to the axis (x=0), which runs through the center of area (F).

14. The scanning unit according to claim 13, **characterized in that** the center of area of the active surfaces of that subgroup (2.4A or 2.4C) of bars (S), which is assigned to detector elements (E) of the same phase (0° or 180°) within said totality (2.4A, 2.4C), coincides in each case with the center of area (F) of the active surfaces of all of the bars (S) of this totality (2.4A, 2.4C) of the bars (S).

15. The scanning unit according to one of the preceding claims, **characterized in that** the center of areas of the active surfaces of all of the subgroups (2.4A, 2.4B, 2.4C, 2.4D), each of which are assigned to detector elements (E) of the same phase (0°, 90°, 180° or 270°), in each case coincide with the center of area (F) of the two totalities (2.4A, 2.4C; 2.4B, 2.4D) of bars (S).

16. The scanning unit according to claim 5 and 15, **characterized in that** each subgroup (2.4B, 2.4C, 2.4D) of bars (S), which does not encompass the bar (2.40A), which is embodied symmetrically with reference to the axis (x=0), which runs through the center of area (F), encompasses at least two bars (2.40C) comprising an active surface, which is reduced as compared to the further bars (S).

17. The scanning unit according to one of the preceding claims, **characterized in that** the scanning structure (2.4) is embodied on a scanning plate (2.3).

18. The scanning unit according to one of the preceding claims, **characterized in that** the detector elements (E), to which the bars (S) of the scanning structure (2.4) are assigned, are arranged in the same order behind one another, as the respectively assigned bars (S) of the scanning structure (2.4).

## Revendications

1. Unité de balayage pour un dispositif de mesure de position, pour le balayage d'une mesure matérialisée du dispositif de mesure, avec
- une structure de balayage prévue sur un support, conçue de telle manière qu'une interaction d'un rayonnement électromagnétique utilisé pour le balayage de la mesure matérialisée avec la mesure matérialisée et avec la structure de balayage permette de produire un motif de bande périodique, et
- un système de détecteurs pour la détection du motif de bande, constitué d'une pluralité d'éléments de détection de phases différentes, disposés les uns derrière les autres, produisant des signaux de sortie avec un décalage de phase représenté par lesdites phases, dans lequel le système des éléments de détection de phases différentes forme un motif périodique, et exactement une région désigné comme barre de la structure de balayage est attribuée à chacun des éléments de détection, et dans lequel les éléments de détection sont rassemblés de telle manière en deux groupes de détecteurs, qu'au moins les ensemble de données de phases identiques appartiennent respectivement au même groupe de détecteurs et que les éléments de détection d'un même groupe de détecteurs sont connectés les uns aux autres pour la production d'un signal de détection,
**caractérisée en ce que**
- les barres (S) de la structure de balayage (2.4) sont conçues et disposées de telle manière, que l'ensemble (2.4A, 2.4C) des barres attribuées au premier groupe de détecteurs (2.9A, 2.9C) et l'ensemble (2.4B, 2.4D) des barres attribuées au deuxième groupe de détecteurs (2.9B, 2.9D) recouvrent chacun une surface de la même taille, active lors de la mesure de position, sur le support de la structure de balayage (2.4), et **en ce que** la surface recouverte par l'ensemble (2.4A, 2.4C) des barres attribuées au premier groupe de détecteurs (2.9A, 2.9C) d'une part et la surface recouverte par l'ensemble (2.4B, 2.4D) des barres attribuées au deuxième groupe de détecteurs (2.9B, 2.9D) d'autre part présentent le même point de gravité de surface (F), et
- l'un des deux ensembles (2.4A, 2.4C ; 2.4B, 2.4D) de barres (S) de la structure de balayage (2.4) comporte une barre de plus que l'autre ensemble (2.4A, 2.4C ; 2.4B, 2.4D) de barres (S) de la structure de balayage (2.4), et
- dans l'ensemble (2.4A, 2.4C ; 2.4B, 2.4D) de barres (S) comportant une barre de plus que l'autre ensemble (2.4A, 2.4C ; 2.4B, 2.4D) de barres (S), au moins deux barres (2.40C) disposées symétriquement par rapport à l'axe (x = 0) s'étendant perpendiculairement au sens de prolongement (x) et passant par le point de gravité de surface (F) comportent une surface active inférieure plus petite lors de la mesure de position que les autres barres (S) de la structure de balayage (2.4), et
- les barres (2.40C) à surface active réduite présentent un écart plus petit par rapport à l'axe (x = 0) passant par le point de gravité de surface (F) que la pluralité des autres barres.

2. Unité de balayage selon la revendication 1, **caractérisée en ce que** des éléments de détection (E) sont chacun attribués à l'une de quatre phases différentes (0°, 90°, 180°, 270°), et **en ce que** les éléments de détection (E) attribués à deux de ces phases (0°, 180°) forment le premier groupe de détecteurs (2.9A, 2.9C) et les éléments de détection (E) attribués au deux autres phases (90°, 270°) forment le deuxième groupe de détecteurs (2.9B, 2.9D).

3. Unité de balayage selon l'une des revendications 1 ou 2, **caractérisée en ce que** les éléments de détection (E) attribués à différentes phases (0°, 90°, 180°, 270°) sont disposés en alternance les uns derrière les autres, de sorte qu'entre deux éléments de détection (E) d'une même phase se trouve à chaque fois un élément de détection (E) de chaque autre phase.

4. Unité de balayage selon l'une des revendications précédentes, **caractérisée en ce que** l'ensemble (2.4A, 2.4C ; 2.4B, 2.4D) des barres (S) de la structure de balayage (2.4) qui sont attribuées aux éléments de détection (E) d'au moins l'un des deux groupe de détecteurs (2.9A, 2.9C ; 2.9B, 2.9D) est disposé symétriquement par rapport à un axe (x = 0) s'étendant perpendiculairement au sens de prolongement (x) de la structure de balayage (2.4) et passant par le point de gravité de surface (F).

5. Unité de balayage selon l'une des revendications précédentes, **caractérisée en ce que** le point de gravité de surface (F) se trouve dans l'une des barres (2.40A) de la structure de balayage (2.4), de sorte que cette barre (2.40A) est conçue symétriquement par rapport à un axe (x = 0) s'étendant perpendiculairement au sens de prolongement (x) de la structure de balayage (2.4) et passant par le point de gravité de surface (F).

6. Unité de balayage selon les revendications 4 et 5, **caractérisée en ce que** les barres (S) de l'ensemble (2.4A, 2.4C) de barres auquel appartient une barre (2.40A) dans laquelle se trouve le point de gravité de surface (F) sont disposées symétriquement par rapport à un axe (x = 0) s'étendant perpendiculairement au sens de prolongement (x) de la structure de balayage (2.4) et passant par le point de gravité de surface (F).

7. Unité de balayage selon la revendication 4, **caractérisée en ce que** les deux ensembles (2.4A, 2.4C ; 2.4B, 2.4D) de barres (S) sont disposés symétriquement par rapport à l'axe (x = 0) s'étendant perpendiculairement au sens de prolongement (x) et passant par le point de gravité de surface (F).

8. Unité de balayage selon la revendication 1, **caractérisée en ce que** la barre (2.40C) à surface active réduite présente une extension plus petite que les autres barres (S) dans un sens (y) transversal au sens de prolongement (x), le long de laquelle les barres (S) sont disposées les unes derrière les autres.

9. Unité de balayage selon la revendication 8, **caractérisée en ce que** la barre (2.40C) à surface active réduite est constituée d'une pluralité de régions de barre (T) espacées les unes par rapport aux autres.

10. Unité de balayage selon la revendication 10, **caractérisée en ce que** les régions de barre (T) sont espacées les unes par rapport aux autres dans un sens (y) s'étendant transversalement au sens de prolongement (x), dans lequel les barres (S) sont disposées les unes derrière les autres.

11. Unité de balayage selon l'une des revendications précédentes, **caractérisée en ce que** la barre (2.40C) à surface active réduite est conçue symétriquement par rapport à un axe s'étendant dans le sens de prolongement (x) de la structure de balayage (2.4).

12. Unité de balayage selon la revendication 5 et l'une des revendications 8 à 11, **caractérisée en ce que** les barres (2.40C) à surface active réduite sont attribuées à des éléments de détection (E) d'une autre phase (90°, 180°, 270°) que la barre (2.40A) dans laquelle se trouve le point de gravité de surface (F).

13. Unité de balayage selon la revendication 2 et selon la revendication 4 ou selon l'une des revendications 5 à 12 rapportées à la revendication 4, **caractérisée en ce que** dans un ensemble (2.4A, 2.4C) de barres (S) disposées symétriquement par rapport à l'axe (x = 0) passant par le point de gravité de surface (F), toutes les barres qui sont attribuées à des éléments de détection (E) avec une même phase (0° ou 180°) sont à chaque fois disposées symétriquement par rapport à l'axe (x = 0) passant par le point de gravité de surface (F).

14. Unité de balayage selon la revendication 13, **caractérisée en ce que** le point de gravité de surface (F) de la surface active du sous-groupe (2.4A ou 2.4C) de barres (S) attribuées à des éléments de détection (E) de la même phase (0° ou 180°) dans ledit ensemble (2.4A, 2.4C) coïncide à chaque fois avec le point de gravité de surface (F) de la surface active de toutes les barres (S) de cet ensemble (2.4A, 2.4C) de barres (S).

15. Unité de balayage selon l'une des revendications précédentes, **caractérisée en ce que** les points de gravité de surface des surfaces actives de tous les sous-groupes (2.4A, 2.4C ; 2.4B, 2.4D) respectivement attribués à des éléments de détection (E) de la même phase (0°, 90°, 180°, 270°) coïncident à chaque fois avec le point de gravité de surface (F) de deux ensembles (2.4A, 2.4C ; 2.4B, 2.4D) de barres.

16. Unité de balayage selon les revendications 5 et 15, **caractérisée en ce que** chaque sous-groupe (2.4B, 2.4C, 2.4D) de barres (S) ne comprenant pas la barre (2.40A) formée symétriquement par rapport à l'axe (x = 0) passant par le point de gravité de surface (F) comporte au moins deux barres (2.40C) à surface active réduite par rapport aux autres barres (S).

17. Unité de balayage selon l'une des revendications précédentes, **caractérisée en ce que** la structure de balayage (2.4) est formée sur une plaque de balayage (2.3).

18. Unité de balayage selon l'une des revendications précédentes, **caractérisée en ce que** les éléments de détection (E) auxquels sont attribuées les barres (S) de la structure de balayage (2.4) sont disposées dans le même ordre les unes derrière les autres que les barres (S) respectivement attribuées de la structure de balayage (2.4).
